# FASCICULE DE BREVET EUROPEEN

(11) **EP 1 049 398 B1**
(45) Date de publication et mention de la délivrance du brevet: **16.04.2003**
(21) Numéro de dépôt: 99903723.7
(22) Date de dépôt: 22.01.1999
(51) Int. Cl.: A47J 43/08, A47J 43/044

(54) **APPAREIL ELECTROMENAGER TENU A LA MAIN, EN PARTICULIER BATTEUR**
ELEKTRISCH BETRIEBENES HAUSHALTSGERÄT, INSBESONDERE HANDMIXER
HAND-HELD HOUSEHOLD ELECTRICAL APPLIANCE, IN PARTICULAR FOOD MIXER

(30) Priorité: 23.01.1998 FR 9800742
(43) Date de publication de la demande: 08.11.2000
(73) Titulaire: Moulinex S.A., 14123 Cormelles Le Royal (FR)
(72) Inventeur: LECERF, Joel, F-50190 Périers (FR); LINGER, Jean-Jacques, F-53000 Laval (FR)
(74) Mandataire: Busquets, Jean-Pierre
(86) Numéro de dépôt international: FR9900140
(87) Numéro de publication internationale: WO99037195

(56) Documents cités:
- DE-A- 1 654 887
- US-A- 2 737 371
- US-A- 3 725 624

## Description

La présente invention concerne un appareil électroménager tenu à la main, destiné à entraîner au moins un outil de travail, comportant un boîtier renfermant un moteur électrique dont l'arbre de sortie est destiné à entraîner l'outil de travail présentant un axe dont une extrémité est insérée dans une ouverture pratiquée dans le boîtier, un commutateur de commande de la vitesse du moteur qui est actionné par un bouton de manoeuvre manuelle monté rotatif suivant un axe de rotation de manière à venir occuper une position "arrêt" et une ou plusieurs positions angulaires "marche", et un dispositif éjecteur de l'outil de travail qui est commandable par le bouton dans sa position "arrêt".

Elle s'applique notamment, mais non exclusivement, à un batteur électrique à main destiné à entraîner au moins un fouet ou au moins un malaxeur.

Dans un appareil électroménager connu de ce genre, c.f. DE-A-1 654 887 ou US-A-2 737 371, tel qu'un batteur à main, le bouton rotatif de manoeuvre manuelle est adapté, outre à commander le commutateur pour régler la vitesse du moteur, à commander le dispositif éjecteur des fouets au moyen d'un mécanisme de commande, du type à came et levier, et, à cet effet, est tourné par l'utilisateur au-delà de sa position "arrêt" pour commander l'actionnement du dispositif d'éjection des fouets. Toutefois, l'éjection des fouets étant réalisée suite au même mouvement de rotation du bouton que celui permettant la commande de la vitesse du moteur, sa mise en oeuvre peut être réalisée involontairement par l'utilisateur lorsque celui-ci tourne le bouton d'une manière intempestive. De plus, le bouton rotatif de manoeuvre manuelle présente une grande amplitude angulaire pour réaliser à la fois la commande de la vitesse au moteur et la commande de l'éjection des fouets, et partant, occupe un encombrement relativement important au sein de l'appareil.

L'invention a notamment pour but de remédier à ces inconvénients et de réaliser un appareil électroménager tenu à la main, du type exposé ci-dessus, dans lequel l'éjection de l'outil de travail puisse être réalisée facilement et avec exactitude dans la position d'arrêt même du bouton de manoeuvre manuelle.

Selon l'invention, le bouton de manoeuvre manuelle est également monté basculant autour d'un axe transversal à son axe de rotation de manière à commander l'actionnement du dispositif éjecteur de l'outil de travail.

Ainsi, le fait de réaliser l'éjection de l'outil de travail suite au mouvement de basculement du bouton qui est donc différent du mouvement de rotation de celui-ci permettant la commande de la vitesse du moteur, exige de la part de l'utilisateur une action volontaire sur le bouton, cette action étant en outre particulièrement aisée. De plus, par son double mouvement de rotation et de basculement, le bouton de manoeuvre occupe un encombrement réduit au sein de l'appareil.

Selon une autre caractéristique importante de l'invention, le bouton de manoeuvre manuelle comporte un ergot venant directement actionner le dispositif éjecteur de l'outil de travail lors du basculement du bouton. Cet ergot d'actionnement direct constitue donc un moyen mécanique simple, contrairement au mécanisme complexe à came et levier selon l'art antérieur, conduisant ainsi à une fabrication peu coûteuse du bouton de manoeuvre manuelle.

Les caractéristiques et avantages de l'invention ressortiront d'ailleurs de la description qui va suivre, à titre d'exemple non limitatif, en référence aux dessins annexés dans lesquels :
- la figure 1 est une vue partielle en coupe verticale d'un appareil électroménager tenu à la main, tel qu'un batteur-mixeur, selon l'invention ;
- la figure 2 est une vue de dessus de l'appareil de la figure 1 ;
- la figure 3 est une vue à échelle agrandie et en perspective d'un bouton de manoeuvre manuelle associé à un commutateur, ce bouton étant illustré dans une position de commande de la vitesse du moteur (en traits pleins) et dans une position d'éjection d'un outil de travail (en traits mixtes) ;
- la figure 4 est une vue schématique en perspective éclatée du commutateur de la figure 3 ;
- la figure 5 est une vue à échelle agrandie et en perspective du bouton associé au commutateur, montrant l'actionnement d'un doigt par une came du bouton lorsque celui-ci occupe une position de commande de la vitesse du moteur ; et
- les figures 6 et 7 sont des vues schématiques montrant une piste conductrice et un contact mobile respectivement non sollicité par le doigt du commutateur de la figure 5 (figure 6) et sollicité par ce même doigt (figure 7).

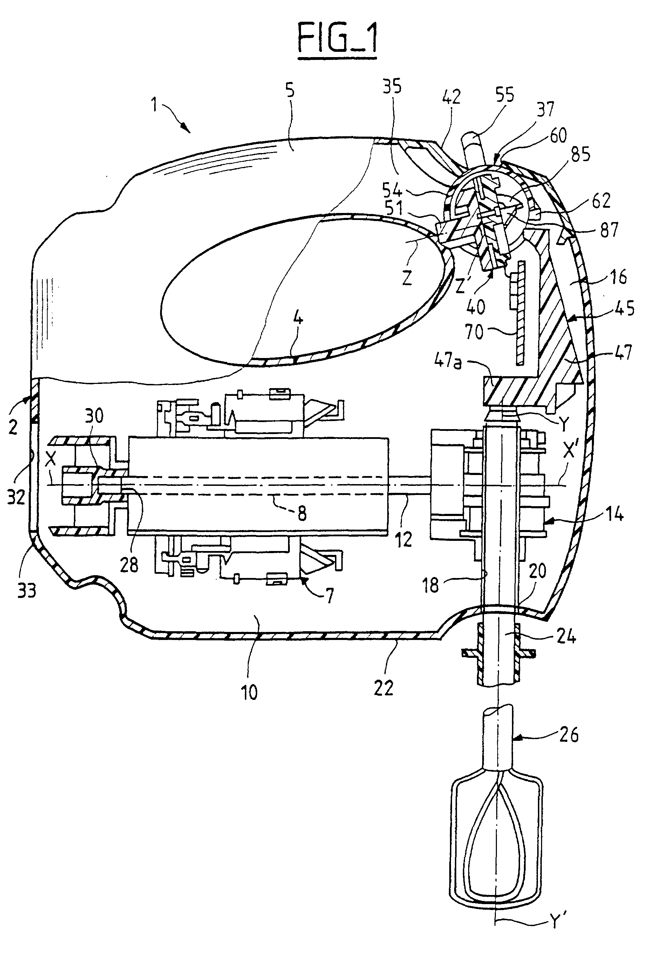

Dans l'exemple de réalisation représenté sur la figure 1, l'appareil électroménager tenu à la main 1 est un batteur-mixeur électrique à main destiné à entraîner de manière sélective au moins un outil de battage, tel qu'un fouet ou un malaxeur, ou un outil de mixage tournant à vitesse élevée, tel que par exemple un pied mixeur à hélice rotative.

Le batteur-mixeur à main 1 illustré à la figure 1 comprend un boîtier 2 de forme générale prismatique présentant une partie évidée 4 qui délimite une poignée 5, et renfermant un moteur d'entraînement électrique 7 muni d'un arbre de sortie 8 d'axe XX' et logé dans la partie inférieure 10 du boîtier 2 en s'y étendant horizontalement.

L'arbre 8 du moteur d'entraînement 7 porte à son extrémité antérieure 12 une vis sans fin (non représentée) qui coopère avec deux pignons hélicoïdaux tournant chacun autour d'un axe vertical YY' perpendiculaire à l'axe XX', et qui forme avec ceux-ci un réducteur 14. Ces deux pignons hélicoïdaux sont situés dans la partie avant 16 du boîtier et sont liés respectivement à deux dispositifs d'accouplement 18 d'axe YY', dont un seul est visible à la figure 1, destinés respectivement à recevoir, par insertion à travers deux ouvertures 20 pratiquées dans la base 22 du boîtier 2, les deux extrémités supérieures des axes respectifs 24 de deux outils de battage, en l'occurrence deux fouets 26 dont un seul est montré à la figure 1 ; ces deux fouets 26 peuvent être fixés dans les dispositifs d'accouplement 18 soit côte à côte, soit l'un derrière l'autre.

D'une manière connue en soi, l'extrémité postérieure 28 de l'arbre 8 du moteur d'entraînement 7 porte un entraîneur rotatif 30 destiné à recevoir, par insertion à travers une ouverture 32 pratiquée dans la paroi arrière 33 du boîtier 2, un outil de mixage (non représenté), tel que par exemple un pied mixeur.

Comme le montre la figure 1, dans la partie supérieure 35 du boîtier 2, à l'avant de celle-ci, est agencé en saillie un bouton de manoeuvre manuelle 37 qui est monté rotatif suivant un axe de rotation noté ZZ', présentement transversal à l'axe YY' des fouets 26. Ce bouton de manoeuvre manuelle 37 est destiné à actionner un commutateur électrique 40 qui met le moteur 7 en et hors service et règle sa vitesse de rotation. Ainsi, le bouton 37 peut occuper une position "arrêt" et une ou plusieurs positions successives "marche", par exemple au nombre de trois, disposées à un certain angle les unes des autres, du même côté de la position "arrêt", de manière à constituer un secteur de commande de la vitesse du moteur 7 permettant, dans cet exemple, de sélectionner trois paliers de vitesse du moteur. Ces différentes positions de commutation électrique du commutateur 40 sont indiquées sous la forme de repères appropriés marqués sur la paroi supérieure 42 du boîtier 2, devant le bouton 37 d'actionnement du commutateur.

En regard de la figure 1, le batteur-mixeur comporte en outre un dispositif éjecteur 45 des fouets 26 qui est commandé par le bouton de manoeuvre manuelle 37 depuis sa position "arrêt". Dans cet exemple de réalisation, le dispositif éjecteur 45 est constitué par une pièce d'éjection mobile 47 agencée verticalement dans la partie avant 16 du boîtier 2, entre le bouton 37 et les deux dispositifs d'accouplement 18. Cette pièce d'éjection 47 présente une partie inférieure 47a prenant appui sur les extrémités supérieures des axes 24 des deux fouets 26, et est sollicitée élastiquement par un ressort de rappel (non figuré) pour passer d'une position basse en l'absence des fouets à une position haute (figure 1) lors du montage des fouets, et inversement de cette position haute à la position basse dans laquelle la pièce d'éjection 47 libère les fouets sous l'action du bouton de manoeuvre manuelle 37 depuis sa position "arrêt".

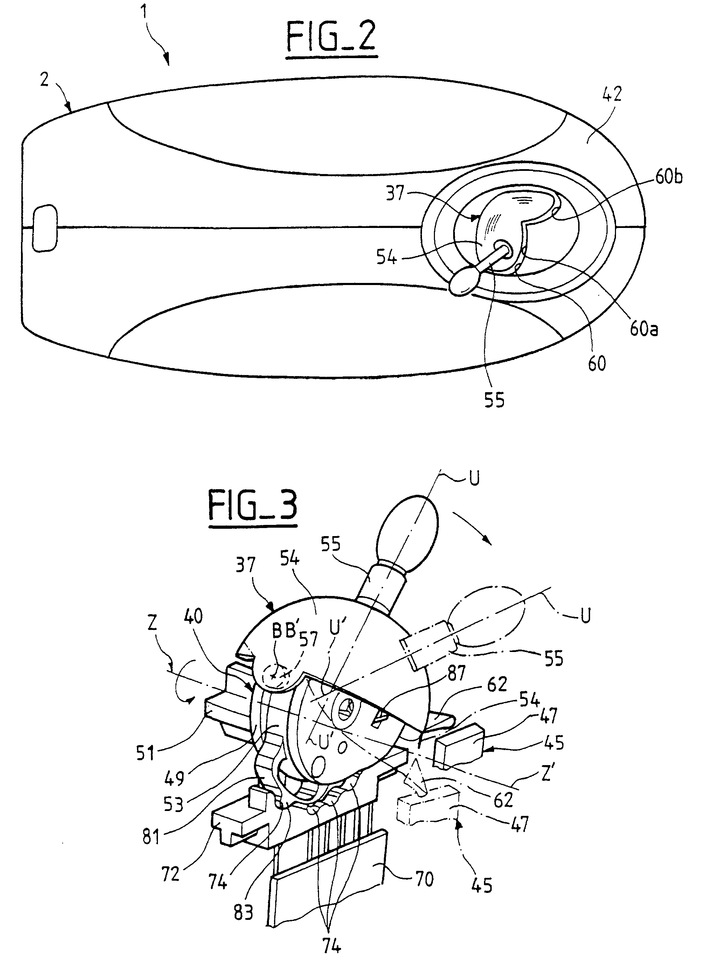

Selon l'invention, en regard de la figure 3, le bouton de manoeuvre manuelle 37 est également monté basculant autour d'un axe, noté BB' sur la figure 3, transversal à son axe de rotation ZZ' de manière à commander l'actionnement de la pièce d'éjection 47 des fouets 26.

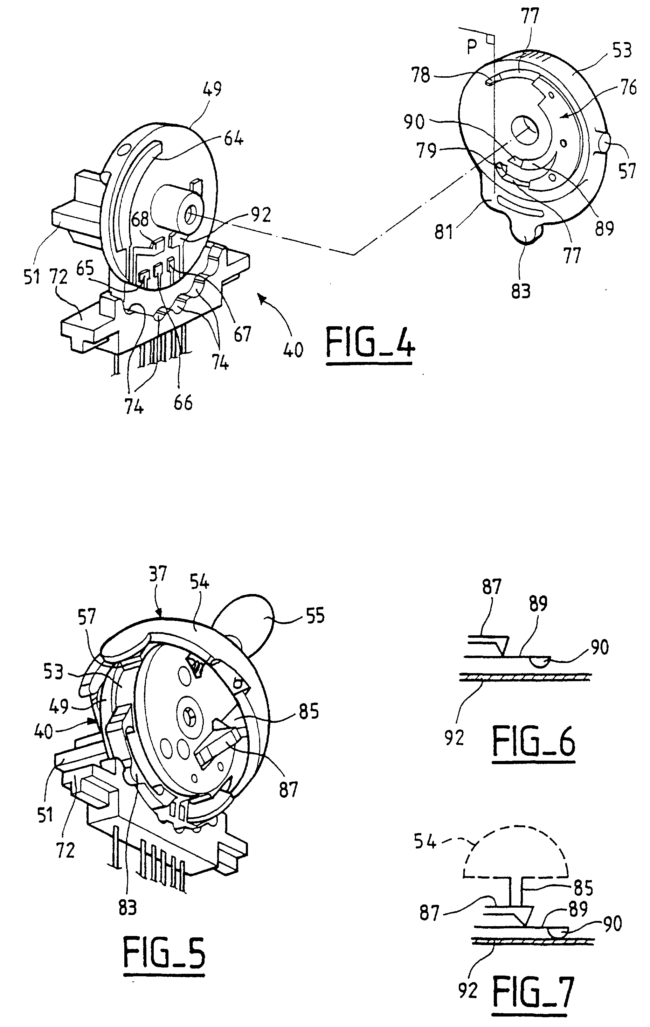

Dans l'exemple de réalisation représenté sur la figure 4, le commutateur 40, que l'on décrira en détail par la suite, est du type rotatif et se compose de deux disques externes concentriques et accolés l'un contre l'autre par tout moyen d'accouplement approprié, à savoir un disque fixe formant support 49 pourvu axialement d'un arbre 51 monté fixement dans le boîtier et constituant l'axe de rotation ZZ' du bouton 37 (figures 1 et 3), et un disque rotatif 53 formant support de commutation réalisé en matière isolante et destiné à être entraîné en rotation par le bouton de manoeuvre manuelle 37 lorsque celui-ci est tourné suivant son axe ZZ' pour venir occuper sa position "arrêt" ou l'une de ses positions "marche". roi supérieure 42 du boîtier 2 à travers une découpe 60 pratiquée dans le boîtier, tandis que la calotte sphérique 54 est montée sous cette découpe 60 en étant appliquée, avec un léger jeu de débattement, contre la face interne de la paroi supérieure 42 du boîtier bordant la découpe 60, formant ainsi un joint d'étanchéité.

La découpe 60, figure 2, comprend une première plage 60a de forme courbe suivant laquelle la calotte sphérique 54 du bouton 37 peut se déplacer, par suite d'une rotation suivant son axe ZZ', pour venir occuper successivement ses différentes positions "marche", au nombre de trois dans l'exemple choisi, correspondant respectivement aux trois paliers déterminés de vitesse du moteur, ainsi que sa position "arrêt", et une seconde plage 60b communiquant avec la première plage 60a et s'étendant au-delà de celle-ci en étant située au niveau de la position "arrêt" du bouton 37, de manière à permettre un basculement de course angulaire importance de la calotte 54 du bouton 37, autour de son axe BB' (figure 3), lorsque le bouton occupe sa position "arrêt" dans laquelle il commande l'actionnement de la pièce d'éjection 47 des fouets.

Dans un exemple de réalisation préféré, la calotte 54 du bouton de manoeuvre manuelle 37 comporte à sa base un ergot 62 (figures 1 et 3), de préférence venu de moulage avec la calotte 54, qui vient actionner directement la pièce d'éjection 47 des fouets lorsque la calotte sphérique 54 du bouton 37 en position "arrêt" est basculée vers l'avant autour de son axe BB' (comme représenté en traits mixtes sur la figure 3), à l'aide de la manette 55 qui est déplacée dans la découpe 60 (figure 2) en venant en butée, en fin de basculement de la calotte 54, contre le bord avant de la plage 60b de la découpe 60, cette dernière faisant ainsi office de limiteur de basculement. Sous l'action directe de l'ergot 62, la pièce d'éjection 47 passe de sa position haute à sa position basse dans laquelle elle libère, par sa partie inférieure 47a (figure 1), les fouets 26 ; après éjection des fouets, la pièce d'éjection 47 est rappelée par son ressort dans sa position haute.

Ainsi, grâce à ce mouvement de basculement de la calotte 54 du bouton de manoeuvre manuelle 37, distinct du mouvement de rotation de ce dernier pour commander les différentes vitesses du moteur, l'éjection des fouets nécessite avantageusement de la part de l'utilisateur une action volontaire, de surcroît aisée, sur le bouton 37, et ce dans la position d'arrêt même du bouton. De plus, l'ergot 62 d'actionnement direct de la pièce d'éjection 47 des fouets constitue un organe particulièrement simple et peu coûteux.

En regard de la figure 4, le disque fixe 49 du commutateur rotatif 40 comprend plusieurs contacts fixes formés par des pistes conductrices distribuées suivant un même arc de cercle, à savoir une piste dite commune 64 et trois pistes 65, 66 et 67 correspondant respectivement, dans l'exemple choisi, aux trois vitesses déterminées du moteur 7, ainsi qu'une piste conductrice intérieure 68, concentrique aux précédentes et correspondant à une vitesse élevée, dite de marche instantanée, qui est utilisée, par exemple, pour un pied mixeur. Ces diverses pistes 64-68 sont toutes reliées électriquement, d'une manière connue en soi, à un circuit imprimé 70 (figure 1) qui, dans l'exemple de réalisation illustré à la figure 1, est monté verticalement dans le boîtier 2. Le disque 49, figure 4, est réalisé en une matière isolante dans laquelle sont avantageusement surmoulées les pistes conductrices 64-68, et comporte à sa partie inférieure une barrette isolante sensiblement parallélépipédique 72, par exemple venue de moulage avec le disque 49, s'étendant dans le boîtier 2 transversalement à l'arbre 51 et comportant sur sa face antérieure un secteur anaulaire à plusieurs crans d'indexage 74 correspondant respectivement à la position "arrêt" et aux différentes positions "marche" du bouton de manoeuvre manuelle.

Sur le disque rotatif 53 du commutateur 40, figure 4, est monté fixement, par tout moyen de fixation approprié, un curseur 76 à lames métalliques souples 77 portant en extrémité deux contacts mobiles 78, 79 qui sont destinés respectivement à venir coopérer avec la piste commune 64 et avec l'une des trois pistes 65 ; 66 ; 67 suivant la position "marche" du bouton 37. Dans un souci de clarté, on n'a pas représenté la lame à contact mobile destiné à coopérer avec la piste 68 correspondant à la vitesse de marche instantanée pour un pied mixeur. Les contacts 78 et 79 s'étendent dans un même plan vertical noté P sur la figure 4. Le disque 53 comporte à sa partie inférieure une languette arrondie 81 présentant une dent verticale descendante 83 engagée successivement, par suite de la rotation du disque 53, dans les différents crans d'indexage 74 de la barrette 72 suivant les positions "arrêt" et "marche" du bouton de manoeuvre manuelle 37, voir figure 3.

Suivant un autre aspect de l'invention, la calotte 54 du bouton de manoeuvre manuelle 37 est en outre propre à basculer autour de son axe BB' dans chacune des positions "marche" du bouton, suivant une course angulaire notablement inférieure à celle permettant de commander l'éjection des fouets, à l'aide de la manette 55 qui est déplacée dans la découpe 60 (figure 2) en venant en butée, en fin de basculement de la calotte 54, contre le bord avant de la plage 60a de la découpe 60, cetre dernière faisant office de limiteur de basculement. Comme le montrent les figures 1 et 5, la calotte 54 du bouton 37 comporte intérieurement une came 85 venant actionner, par suite du basculement de la calotte 54 dans chacune des positions "marche" du bouton, un doigt 87 qui est monté mobile dans le disque rotatif 53 du commutateur 40 (figure 5) et qui vient actionner une lame métallique supplémentaire souple 89 à contact mobile 90 (figure 4) situé en retrait du plan P et venant coopérer avec une piste conductrice spécifique, repérée en 92 sur la figure 4, portée par le disque fixe 49 du commutateur 40, de manière à augmenter la vitesse du moteur pendant une courte durée, facilitant ainsi, par exemple, l'incorporation d'ingrédients en cours de préparation des aliments.

Sur la figure 6, on a représenté schématiquement le doigt 87 en une position de repos, définie avant basculement de la calotte 54 du bouton 37 dans chacune de ses positions "marche", et dans laquelle il est en appui sur la lame métallique 89 portant en extrémité le contact mobile 90 situé à distance de la piste conductrice associée 92 ; sur la figure 7, on a représenté ce même doigt 87 en une position de travail en laquelle il est actionné par la came 85 de la calotte 54 du bouton lors du basculement de cette calotte dans chacune des positions "marche" du bouton, et dans laquelle il fait fléchir la lame métallique 89 de manière à appliquer le contact mobile 90 sur la piste conductrice 92, permettant ainsi d'augmenter la vitesse du moteur.

On notera que l'invention décrite ci-dessus dans le cadre d'un batteur-mixeur électrique à main s'applique également à tout autre type d'appareil électroménager tenu à la main faisant intervenir une éjection de l'outil de travail et une variation de vitesse du moteur, tel que par exemple un couteau électrique ou encore un mixeur plongeant.

## Revendications

1. Appareil électroménager tenu à la main, destiné à entraîner au moins un outil de travail (26), comportant un boîtier (2) renfermant un moteur électrique (7) dont l'arbre de sortie (8) est destiné à entraîner l'outil de travail (26) présentant un axe (24) dont une extrémité est insérée dans une ouverture (20) pratiquée dans le boîtier, un commutateur (40) de commande de la vitesse du moteur (7) qui est actionné par un bouton de manoeuvre manuelle (37) monté rotatif suivant un axe de rotation (ZZ') de manière à venir occuper une position "arrêt" et une ou plusieurs positions angulaires "marche", et un dispositif éjecteur (45) de l'outil de travail (26) qui est commandable par le bouton (37) dans sa position "arrêt",
**caractérisé en ce que** le bouton de manoeuvre manuelle (37) est également monté basculant autour d'un axe (BB') transversal à son axe de rotation (ZZ') de manière à commander l'actionnement du dispositif éjecteur (45) de l'outil de travail (26).

2. Appareil électroménager tenu à la main selon la revendication 1,
**caractérisé en ce que** le bouton de manoeuvre manuelle (37) comporte un ergot (62) venant directement actionner le dispositif éjecteur (45) de l'outil de travail (26) lors du basculement du bouton (37).

3. Appareil électroménager tenu à la main selon la revendication 1 ou 2, dans lequel le commutateur (40) est rotatif et comprend des contacts électriques fixes formés par des pistes conductrices (64-68) distribuées en arc de cercle, et des contacts électriques mobiles (78,79) coopérant chacun avec l'une des pistes correspondantes suivant la position "marche" du bouton de manoeuvre (37),
**caractérisé en ce que** les contacts électriques mobiles (78,79) sont montés fixes dans un support rotatif de commutation (53) entraîné en rotation par le bouton (37), lequel bouton (37) est en outre propre à basculer dans chacune de ses positions "marche" en étant subordonné à un limiteur de basculement (60), suivant une course angulaire inférieure à celle lui permettant de commander l'actionnement du dispositif éjecteur (45), et le bouton (37) comporte une came (85) venant actionner, par basculement dudit bouton (37) dans chacune de ses positions "marche", un doigt (87) qui est monté mobile dans le support de commutation (53) et qui vient actionner un contact mobile supplémentaire (90) pour le faire coopérer avec au moins une piste conductrice spécifique (92) permettant d'augmenter la vitesse du moteur pendant une courte durée.

4. Appareil électroménager tenu à la main selon la revendication 3,
**caractérisé en ce que** le limiteur de basculement est constitué par une découpe (60) pratiquée dans le boîtier (2), dans laquelle fait saillie le bouton (37), et qui comprend deux plages communiquant l'une avec l'autre, soit une première plage (60a) permettant le basculement du bouton (37) lorsque celui-ci occupe chacune de ses positions "marche", soit une seconde plage (60b) s'étendant au-delà de la première (60a) et permettant le basculement amplifié du bouton (37) lorsque celui-ci occupe sa position "arrêt" dans laquelle il commande l'actionnement du dispositif éjecteur (45).

5. Appareil électroménager tenu à la main selon la revendication 3 ou 4,
**caractérisé en ce que** les pistes conductrices (64-68,92) sont placées sur un support (49) qui est lié au support rotatif de commutation (53) et qui comprend un arbre (51) monté fixement dans le boîtier et constituant l'axe de rotation (ZZ') du bouton (37), ledit bouton (37) étant monté articulé sur deux pions (57) formés sur le support rotatif de commutation (53) et alignés axialement de manière à former l'axe de basculement (BB') du bouton (37).

6. Appareil électroménager tenu à la main selon la revendication 5,
**caractérisé en ce que** l'axe de rotation (ZZ') et l'axe de basculement (BB') du bouton (37) sont situés dans des plans orthogonaux l'un à l'autre.

7. Appareil électroménager tenu à la main selon la revendication 5 ou 6,
**caractérisé en ce que** le support (49) est réalisé en une matière isolante dans laquelle sont surmoulées les pistes conductrices (64-68, 92).

8. Appareil électroménager tenu à la main selon l'une quelconque des revendications précédentes,
**caractérisé en ce que** le bouton de manoeuvre manuelle (37) est conformé en une calotte sphérique (54) surmontée d'une manette (55).

9. Appareil électroménager tenu à la main selon les revendications 4 et 8,
**caractérisé en ce que** la calotte sphérique (54) est montée sous la découpe (60) du boîtier (2) en étant appliquée avec un léger jeu de débattement contre la face interne du boîtier bordant ladite découpe (60), ladite calotte sphérique (54) formant ainsi un joint d'étanchéité.

10. Appareil électroménager tenu à la main selon l'une quelconque des revendications précédentes,
**caractérisé en ce qu**'il constitue un batteur électrique à main.

## Patentansprüche

1. In der Hand zu haltendes elektrisch betriebenes Haushaltsgerät, das zum Antrieb wenigstens eines Arbeitswerkzeugs (26) dient, mit einem Gehäuse (2), das einen Elektromotor (7) umschließt, dessen Abtriebswelle (8) zum Antrieb des Arbeitswerkzeugs (26) bestimmt ist, das eine Achse (24) aufweist, von der ein Ende in eine im Gehäuse ausgebildete Öffnung (20) eingesetzt ist, sowie einen Schalter (40) zur Steuerung der Geschwindigkeit des Motors (7), der durch einen Handbedienungsknopf (37) betätigbar ist, der gemäß einer Drehachse (ZZ') drehbar so montiert ist, daß er eine Stellung "Halt" ("Aus") und eine oder mehrere Einschaltwinkelstellungen "Gang" ("Ein") einnehmen kann, und eine Auswurfvorrichtung (45) für das Arbeitswerkzeug (26) umschließt, die durch den Knopf (37) in seiner Stellung "Halt" steuerbar ist, **dadurch gekennzeichnet, daß** der Handbedienungsknopf (37) auch um eine zu seiner Drehachse (ZZ') quer verlaufende Achse (BB') schwenkbar montiert ist, um die Betätigung der Auswurfvorrichtung (45) für das Arbeitswerkzeug (26) zu steuern.

2. Elektrisch betriebenes, in der Hand zu haltendes Haushaltsgerät nach Anspruch 1, **dadurch gekennzeichnet, daß** der Handbedienungsknopf (37) einen Zapfen (62) aufweist, der beim Schwenken des Knopfes (37) die Auswurfvorrichtung (45) des Arbeitswerkzeugs (26) direkt betätigt.

3. In der Hand zu haltendes elektrisch betriebenes Haushaltsgerät nach Anspruch 1 und 2, worin der Schalter (40) drehbar ist und feste elektrische Kontakte aufweist, die durch Leiterbahnen (64 - 68) gebildet sind, die kreisbogenförmig verteilt sind, und bewegliche elektrische Kontakte (78, 79) aufweist, die jeder mit einer der entsprechenden Leiterbahnen gemäß der Stellung "Gang" ("Ein") des Bedienungsknopfes (37) zusammenwirken, **dadurch gekennzeichnet, daß** die beweglichen elektrischen Kontakte (78, 79) fest in einem drehbarem Schaltträger (53) montiert sind, der durch den Knopf (37) drehend angetrieben ist, wobei der Knopf (37) außerdem in jeder seiner Stellungen "Gang" ("Ein") bei Unterordnung unter einen Schwenkbegrenzer (60) gemäß einer geringeren Winkelstrecke als die, welche die Steuerung der Auswurfvorrichtung (45) ermöglicht, schwenkbar ist und der Knopf (37) eine Nocke (85) aufweist, die durch Schwenken des Knopfes (37) in jeder seiner Stellungen ""Gang" ("Ein") einen Finger (87) betätigt, der in dem Schaltträger (53) beweglich montiert ist und einen zusätzlichen beweglichen Kontakt (90) betätigt, so daß dieser mit wenigstens einer spezifischen Leiterbahn (92) zusammenwirkt, welche eine Erhöhung der Umdrehungsgeschwindigkeit des Motors während einer kurzen Zeit ermöglicht.

4. In der Hand zu haltendes elektrisch betriebenes Haushaltsgerät nach Anspruch 3, **dadurch gekennzeichnet, daß** der Schwenkungsbegrenzer aus einem Ausschnitt (60) besteht, der im Gehäuse (2) ausgebildet ist und in den der Knopf (37) vorspringt und der zwei mit einander in Verbindung stehende Bereiche aufweist, nämlich einen ersten Bereich (60a), der das Schwenken des Knopfes (37) zuläßt, wenn dieser irgendeine seiner Stellungen "Gang" ("Ein") einnimmt, und einen zweiten Bereich (69b), der sich jenseits des ersten Bereichs (60a) erstreckt und das verstärkte Schwenken des Knopfes (37) zuläßt, wenn dieser seine Stellung "Halt" ("Aus") einnimmt, in welcher er die Betätigung der Auswurfvorrichtung (45) steuert.

5. In der Hand zu haltendes elektrisch betriebenes Haushaltsgerät nach Anspruch 3 oder 4, **dadurch gekennzeichnet, daß** die Leiterbahnen (64 - 68, 92) auf einem Träger (49) angeordnet sind, der mit dem drehbarem Schaltträger (53) verbunden ist und eine Welle (51) aufweist, die im Gehäuse fest montiert ist und die Drehachse (ZZ') des Knopfes (37) bildet, wobei der Knopf (37) an zwei am drehbaren Schaltträger (52) ausgebildeten Zapfen (57) angelenkt ist, die axial ausgerichtet sind, um die Schwenkachse (BB') des Knopfes (37) zu bilden.

6. In der Hand zu haltendes elektrisch betriebenes Haushaltsgerät nach Anspruch 5, **dadurch gekennzeichnet, daß** die Drehachse (ZZ') und die Schwenkachse (BB') des Knopfes (37) in zueinander orthogonalen Ebenen liegen.

7. In der Hand zu haltendes elektrisch betriebenes Haushaltsgerät nach Anspruch 5 oder 6, **dadurch gekennzeichnet, daß** der Träger (49) aus einem isolierendem Material hergestellt ist, in das die Leiterbahnen (64 - 68, 92) eingeformt sind.

8. In der Hand zu haltendes elektrisch betriebenes Haushaltsgerät nach einem der vorangehenden Ansprüche, **dadurch gekennzeichnet, daß** der Handbedienungsknopf (37) als eine Kugelkalotte (54) mit einem darüber angeordnetem Bedienungsgriff (55) ausgebildet ist.

9. In der Hand zu haltendes elektrisch betriebenes Haushaltsgerät nach den Ansprüchen 4 und 8 **dadurch gekennzeichnet, daß** die Kugelkalotte (54) unter dem Ausschnitt (60) des Gehäuses (2) montiert ist, wobei sie mit einem geringem Bewegungsspiel gegen die an den Ausschnitt (60) angrenzende Innenseite des Gehäuses anliegt und die Kugelkalotte (54) so eine Dichtung bildet.

10. In der Hand zu haltendes elektrische betriebenes Haushaltsgerät nach einem der vorangehenden Ansprüche, **dadurch gekennzeichnet, daß** es ein in der Hand zu haltendes elektrisches Rührgerät ist.

## Claims

1. Hand-held domestic electrical apparatus, intended to drive at least one working tool (26), comprising a casing (2) containing an electric motor (7) whose output shaft (8) is intended to drive the working tool (26) having a spindle (24), one end of which is inserted in an opening (20) formed in the casing, a switch (40) controlling the speed of the motor (7) which is actuated by a manual operating knob (37) mounted so as to rotate on a rotation axis (ZZ') so as to come to occupy an "off" position and one or more angular "on" positions, and a device (45) for ejecting the working tool (26) which can be controlled by the knob (37) in its "off" position,
**characterised in that** the manual operating knob (37) is also mounted so as to rock about an axis (BB') transverse to its rotation axis (ZZ') so as to control the actuation of the device (45) for ejecting the working tool (26).

2. Hand-held domestic electrical apparatus according to claim 1, **characterised in that** the manual operating knob (37) has a lug (62) directly actuating the device (45) for ejecting the working tool (26) when the knob (37) rocks.

3. Hand-held domestic electrical apparatus according to claim 1 or 2, in which the switch (40) is rotary and comprises fixed electrical contacts formed by conductive tracks (64-68) distributed in an arc of a circle, and movable electrical contacts (78, 79) each cooperating with one of the corresponding tracks according to the "on" position of the operating knob (37), **characterised in that** the movable electrical contacts (78, 79) are mounted fixed in a rotary switching support (53) driven in rotation by the knob (37), which knob (37)is also able to rock in each of its "on" positions whilst being dependent on a rocking limiter (60) on an angular travel less than that enabling it to control the actuation of the ejecting device (45), and the knob (37) has a cam (85) actuating, by rocking the said knob (37) in each of its "on" positions, a finger (87) which is mounted so as to be able to move in the switching support (53) and which actuates an additional movable contact (90) in order to make it cooperate with at least one specific conductive track (92) for increasing the speed of the motor for a short duration.

4. Hand-held domestic electrical apparatus according to claim 3, **characterised in that** the rocking limiter consists of a cutout (60) formed in the casing (2), in which the knob (37) projects, and which comprises two areas communicating with one another, either a first area (60a) allowing the rocking of the knob (37) when the latter occupies each of its "on" positions, or a second area (60b) extending beyond the first (60a) and allowing the amplified rocking of the knob (37) when the latter occupies its "off" position in which it controls the actuation of the ejecting device (45).

5. Hand-held domestic electrical apparatus according to claim 3 or 4, **characterised in that** the conductive tracks (64-68, 92) are placed on a support (49) which is connected to the rotary switching support (53) and which comprises a shaft (51) mounted fixedly in the casing and constituting the rotation axis (ZZ') of the knob (37), the said knob (37) being mounted articulated on two pins. (57) formed on the rotary switching support (53) and aligned axially so as to form the rocking axis (BB') of the knob (37).

6. Hand-held domestic electrical apparatus according to claim 5, **characterised in that** the rotation axis (ZZ') and the rocking axis (BB') of the knob (37) are situated in planes orthogonal to one another.

7. Hand-held domestic electrical apparatus according to claim 5 or 6, **characterised in that** the support (49) is produced from an insulating material in which the conductive tracks (64-68, 92) are overmoulded.

8. Hand-held domestic electrical apparatus according to any one of the preceding claims, **characterised in that** the manual operating knob (37) is formed as a spherical cap (54) surmounted by a handle (55).

9. Hand-held domestic electrical apparatus according to claims 4 and 8, **characterised in that** the spherical cap (54) is mounted under the cutout (60) in the casing (2) whilst being applied with a slight movement clearance against the internal face of the casing bordering the said cutout (60), the said spherical cap (54) thus forming a sealing joint.

10. Hand-held domestic electrical apparatus according to any one of the preceding claims, **characterised in that** it constitutes a hand-held electric beater.
